Europäisches Patentamt

European Patent Office

Office européen des brevets

(11) Veröffentlichungsnummer: **0 055 498**
**A1**

## EUROPÄISCHE PATENTANMELDUNG

(21) Anmeldenummer: **81201321.7**

(22) Anmeldetag: **03.12.81**

(51) Int. Cl.³: **H 02 H 3/38**

(30) Priorität: **23.12.80 CH 9516/80**

(43) Veröffentlichungstag der Anmeldung:
**07.07.82 Patentblatt 82/27**

(84) Benannte Vertragsstaaten:
**CH DE LI NL**

(71) Anmelder: **BBC Aktiengesellschaft Brown, Boveri & Cie.**

**CH-5401 Baden(CH)**

(72) Erfinder: **De Mesmaeker, Ivan, Dipl.-Ing.**
**Zelgliackerstrasse 12**
**CH-5200 Windisch(CH)**

(72) Erfinder: **Reinhard, Slawomir, Dipl.-Ing.**
**Hiltibergstrasse 27**
**CH-5442 Fislisbach(CH)**

(54) **Verfahren und Einrichtung zur distanzselektiven Kurzschlussüberwachung von elektrischen Leitungen.**

(57) Bei einer distanzselektiven Kurzschlussüberwachung von elektrischen Leitungen mit polygonalem Auslösegebiet mit Hilfe von Phasenwinkelüberwachung wird für den Richtungsentscheid eine kurzschlussfremde Spannung beigezogen. Es werden weitere Spannungswandler ($WU_S$, $WU_T$) verwendet, die eventuell über eine Mischstufe (M) an das Richtungsmessglied (DZ) angeschlossen sind. Somit wird der Richtungsentscheid auch bei sehr nahen Fehlern ermöglicht.

Fig. 3

0055498

103/80
PL/eh

- 1 -

Verfahren und Einrichtung zur distanzselektiven
Kurzschlussüberwachung von elektrischen Leitungen

Die Erfindung bezieht sich auf ein Verfahren gemäss dem
Obergebriff des Anspruchs 1 und auf eine Einrichtung zur
Durchführung des Verfahrens.

Ein Verfahren und eine entsprechende Einrichtung zur Kurzschlussüberwachung der vorgenannten Art ist aus der
DE-PS 1 947 037 bekannt. Hier werden für die Bestimmung
der Reaktanzgrenze, d.h. der im wesentlichen die Ausdehnung
des Auslösegebietes in Richtung der Reaktanzachse der Impedanzebene bestimmenden Grenze bzw. Grenzabschnitte des Auslösegebietes, und der Resistanzgrenze, d.h. der im wesentlichen die Ausdehnung des Auslösegebietes in Richtung der
Resistanzachse der Impedanzebene bestimmenden Grenze bzw.
Grenzabschnitte, zwei gegeneinander phasenverschobene Bezugssignale mit je einem zugehörigen Stromwandler und Phasendrehglied verwendet. Weiterhin sind für die Bildung der

- 2 -

entsprechenden Differenzsignale mit der Leitungsspannung verschiedene Spannungswandler-Sekundärwicklungen vorgesehen. Der dadurch bedingte Schaltungsaufwand ist zudem auch im Falle der Mehrfachverwendung mit Auswahl-Umschaltung eines Messsystems für verschiedene Leiter bzw. Phasen eines Mehrphasen-Leitungssystems für die verschiedenen Leiter vorzusehen.

Die Verwendung der sogenannten kranken Spannung für den Richtungsentscheid hat folgende Nachteile:

Man erreicht keinen eindeutigen Entscheid bei sehr nahem Fehler, die Abhängigkeit von der Form der Kurzschlussspannung ist stark und die Verwendung der kranken Spannung ist für die Zusammenarbeit mit kapazitivem Spannungswandler ungeeignet.

Die Aufgabe der Erfindung ist, die Nachteile des Bekannten zu beseitigen und ein Kurschlussüberwachungsverfahren und eine entsprechende Einrichtung zu schaffen, die ein polygonales Auslösegebiet mit vergleichsweise geringem Schaltungsaufwand zu verwirklichen gestatten und gleichzeitig den Richtungsentscheid gewährleisten. Die Erfindung, wie sie in den Ansprüchen gekennzeichnet ist, löst die Aufgabe. Man braucht zwar eine aufwendigere Schaltung, der Richtungseintscheid ist jedoch eindeutig auch bei sehr nahen Fehlern, weil die Verwendung der kurzschlussfremden, sogenannten gesunden Spannung eine Charakteristik ermöglicht, aus welcher der Richtungsentscheid leicht feststellbar ist. Der Gegenstand der Erfindung ist auch bei nahen dreipoligen Fehlern verwendbar.

Im folgenden wird die Erfindung anhand von zwei Diagrammen

- 3 -

und einer Schaltungsanordnung näher erläutert. Es zeigt

Fig. 1  das Beispiel eines polygonalen Auslösegebietes in
        der Impedanzebene,

Fig. 2  ein Vektordiagramm zur Gewinnung der Bezugssignale
        und

Fig. 3  das Prinzipschaltbild einer Einrichtung zur Kurzschlussüberwachung.

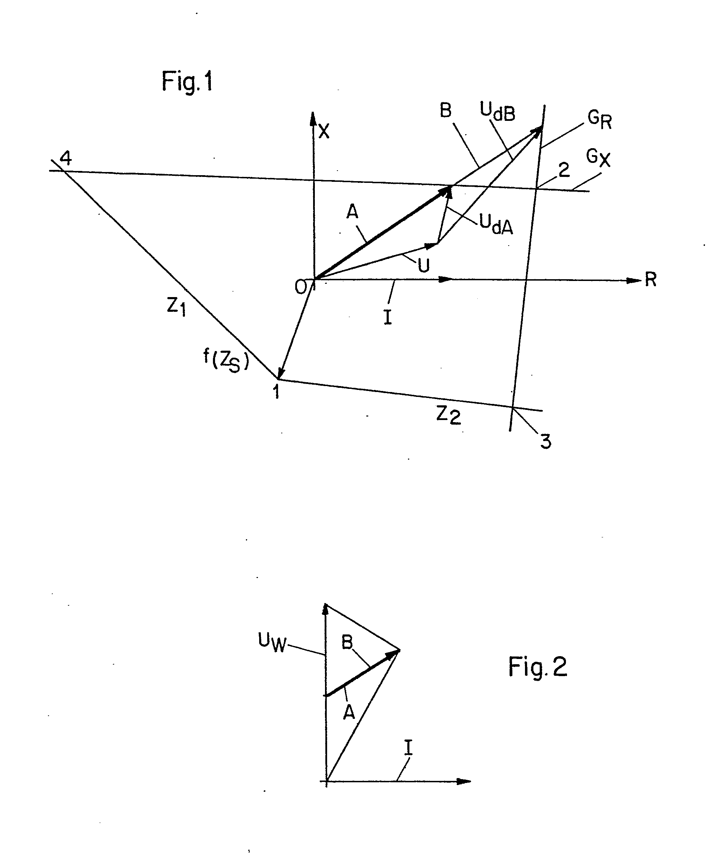

In der in Fig. 1 angedeuteten Impedanzebene mit reeller
Achse R und imaginärer Achse X liegt der Vektor des Leitungsstromes I als Phasenwinkel-Bezugsgrösse in der
reellen Achse, während die Leitungsspannung U mit dieser
einen vom Betriebs- bzw. Fehlerzustand abhängigen Winkel
bildet. Das Auslösegebiet ist durch die Eckpunkte 1, 2, 3
und 4 bestimmt. Eine Lage des Vektors der Leitungsspannung
U innerhalb dieses Auslösegebietes stellt das Fehlerkriterium dar, während eine Lage der Vektorspitze von U ausserhalb der Auslösegrenzen, d.h. der Geradenabschnitte zwischen
den genannten Eckpunkten, einen nicht fehlerhaften Betriebszustand kennzeichnet. Die das Auslösegebiet im wesentlichen
in Richtung der imaginären Achse begrenzende Gerade $G_X$ wird
als Reaktanzgrenze, die das Auslösegebiet im wesentlichen
in Richtung der reellen Achse begrenzende Gerade $G_R$ als
Resistanzgrenze bezeichnet. Die durch den Koordinaten-Nullpunkt nicht verlaufenden, nur wenig gegen X bzw. R geneigten Grenzen $Z_1$ und $Z_2$ haben im wesentlichen die Funktion
einer Richtungsbestimmung des Leistungsflusses bezüglich
des Messortes an der Leitung und werden als Richtungsgrenzen bezeichnet. Sie gewährleisten zusätzlich den Richtungsentscheid. Durch die Abhängigkeit des Leitungsspannungs-

- 4 -

vektors U nach Betrag und Richtung von der Distanz des Fehlerortes vom Messort ergibt sich die Distanzselektivität des Auslösekriteriums.

Zur Durchführung der Fehlerüberwachung werden die gleichphasigen Bezugssignale A und B mit bezüglich des Leitungsstromes I fester Phasenlage und ebensolchen Amplituden sowie weiterhin unter Verwendung der Leitungsspannung U zugehörige Differenzsignale $U_{dA}$ und $U_{dB}$ gebildet. Durch Vergleich der Phasenwinkel dieser Differenzsignale mit vorgegebenen Grenzphasenwinkeln lassen sich eindeutig Aussagen über die Lage der Vektorspitze von U innerhalb oder ausserhalb derjenigen Grenze - $G_R$ oder $G_X$ - gewinnen, die durch die Vektorspitze des zu dem betreffenden Differenzsignals gehörigen Bezugssignals - A oder B - verläuft.

Es ist also die Verschiebungslage - z.B. gekennzeichnet durch den Schnittpunkt mit X oder R - für jede so festgelegte Auslösegrenze durch die Lage der Vektorspitze eines zugehörigen Bezugssignals bestimmt und somit unabhängig vom jeweils anderen Bezugssignal durch Amplitudeneinstellung bestimmbar. Die Richtung einer durch die Vektorspitze eines Bezugssignals verlaufenden Grenze ist demgegenüber durch den Grenzphasenwinkel bestimmt, mit dem das zugehörige Differenzsignal verglichen wird. Da diese Grenzphasenwinkel - sei es durch Bildung von Vergleichssignalen, die selbst eine entsprechende Phasenlage haben, und unmittelbaren Phasenvergleich zwischen Differenzsignal und Vergleichssignal oder durch Bildung eines Vergleichssignals mit einem von der Richtung der betreffenden Auslösegrenze verschiedenen Phasenwinkel und messtechnische Einführung eines Zusatzwinkels beim Phasenvergleich zwischen Differenzsignal und Vergleichssignal freizügig wählbar sind, kann damit nicht nur die genaue Richtungsbestimmung der Grenzen, sondern auch deren Charakter als

- 5 -

Reaktanz- oder Resistanzgrenze festgelegt bzw. vertauscht werden.

Wird z.B. der Grenzphasenwinkel für $U_{dA}$, wie in Fig. 1 angenommen, annähernd Null bezüglich R bzw. I gewählt, so ist damit die durch die Spitze von A verlaufende Grenze als Reaktanzgrenze - daher im Beispiel mit $G_X$ bezeichnet - festgelegt. Wird dagegen etwa der Grenzphasenwinkel für $U_{dA}$ annähernd bei 90° bezüglich R oder Null bezüglich X gewählt, so ist damit die durch die Spitze von A verlaufende Grenze als Resistanzgrenze festgelegt. Entsprechendes gilt selbstverständlich für die durch die Spitze von B verlaufende Grenze, die im Beispielsfall mit einem Grenzphasenwinkel von annähernd Null bezüglich X oder 90° bezüglich R für den Grenzphasenvergleich von $U_{dB}$ gewonnen wird und daher die Resistanzgrenze $G_R$ darstellt. Selbstverständlich sind beliebige Richtungen der beiden Grenzen zwischen den erwähnten Fällen einstellbar, wobei im allgemeinen keine eindeutige Zuordnung zu der Begrenzung des Auslösegebietes in Reaktanz- bzw. Resistanzrichtung mehr gegeben ist. Insgesamt lassen sich also mit gleichphasigen Bezugssignalen beliebig angeordnete und gerichtete, nicht durch den Koordinatennullpunkt verlaufende Auslösegrenzen realisieren.

Fig. 2 zeigt im Vektordiagramm eine Möglichkeit der Bildung gleichphasiger Bezugssignale A, B aus der zum Leitungsstrom I im wesentlichen rechtwinkligen Ausgangsspannung $U_W$ eines üblichen Strom-Spannungswandlers durch Abgriff zwischen den Teilspannungen von $U_W$ einerseits und den Teilspannungen (nicht näher bezeichnet) eines üblichen, orthogonalen Phasendrehgliedes andererseits. Durch Aenderung der Phasenlage dieses Drehgliedes kann die Phasenlage von A und B ohne Amplitudenänderung eingestellt werden, wenn der Abgriff auf

- 6 -

der Hälfte von $U_W$ erfolgt.

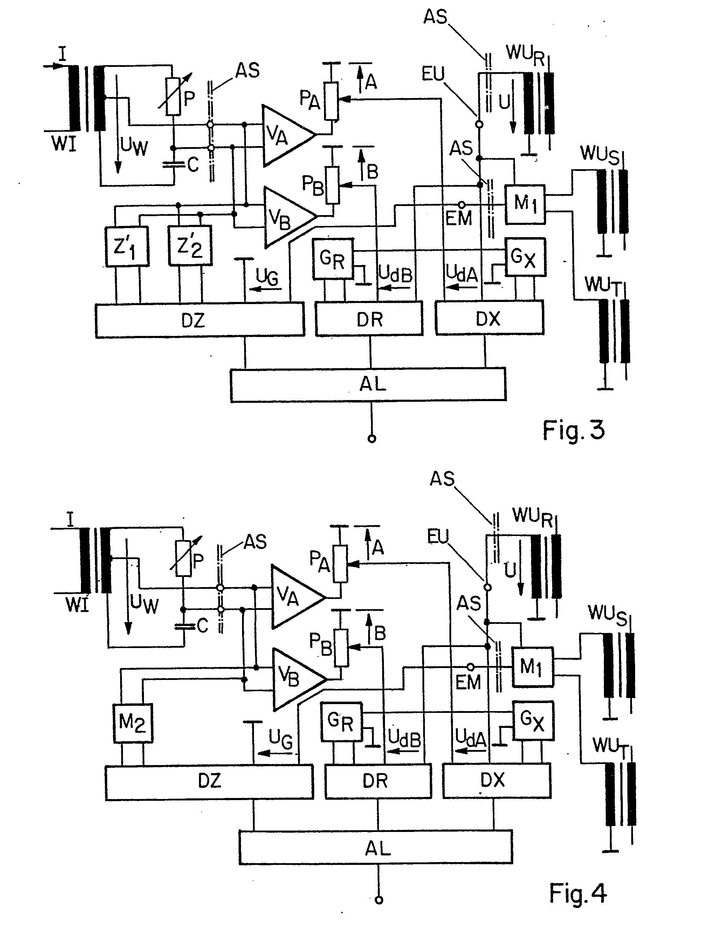

Die in Fig. 3 gezeigte Schaltung verwirklicht die Gewinnung von A und B gemäss Fig. 2 mittels nur eines Strommesskanals in Form eines Strom-Spannungswandlers WI mit sekundärseitigem Mittelabgriff und nachgeordnetem Phasendrehglied aus einem Potentiometer P und einem Kondensator C. Eine gemeinsame, phasenbestimmende Ausgangsgrösse für die Bildung der beiden Bezugssignale wird zwischen dem Mittelabgriff der Sekundärwicklung des Strom-Spannungswandlers WI einerseits und dem Schaltungspunkt zwischen P und C andererseits abgenommen und parallel zwei Verstärkern $V_A$ und $V_B$ mit nachgeordneten Potentiometern $P_A$ bzw. $P_B$ als amplitudenbestimmenden Gliedern zugeleitet, an deren Abgriffen die phasengleichen Bezugssignale A und B mit wählbarer Amplitude zur Verfügung stehen.

Die Differenzsignale $U_{dA}$ und $U_{dB}$ ergeben sich durch Gegeneinanderschaltung von A bzw. B mit der über einen Spannungswandler $WU_R$ gewonnen Leitungsspannung U und werden je einem Phasenvergleicher DX bzw. DR zugeführt. An dem Richtungsmessglied DC sind über eine Mischstufe M zwei weitere Spannungswandler $WU_S$, $WU_T$ angeschlossen. Die Grenzphasenwinkel, welche wie oben erläutert die Richtung der Reaktanz- und Resistanzgrenze $G_X$ bzw. $G_R$ bestimmen, werden in an sich üblichen und daher nicht näher dargestellten Phasendrehgliedern (der Einfachheit halber ebenfalls mit $G_X$ und $G_R$ bezeichnet) aus einem gemeinsamen Bezugssignal abgeleitet, im Beispielsfall aus dem Bezugssignal A. Grundsätzlich kommt als Bezugssignal für die Gewinnung der Grenzphasenwinkel aber auch jedes andere Signal von definierter Phasenlage gegenüber dem Leitungsstrom I in Betracht, etwa das Ausgangssignal des Strom-Spannungswandlers selbst.

Die Grenzphasenwinkelüberwachung erfolgt in den Phasenvergleichern DX und DR in dem Sinne, dass jeweils in Abhängigkeit von einer Lage der Vektorspitze von U innerhalb oder ausserhalb von $G_X$ bzw. $G_R$ ein Binärsignal an eine Auswertelogik AL gegeben wird. Letztere erhält weiterhin ein Binärsignal in Abhängigkeit von der Phasenlage der Leitungsspannung U innerhalb oder ausserhalb des kleineren Winkels (zum Auslösegebiet hin geöffnet) zwischen den Richtungsgrenzen $Z_1$ und $Z_2$, die ebenfalls durch entsprechende Bezugssignale bzw. -vektoren bestimmt sind. Letztere werden im Beispielsfall in zwei mit $Z'_1$ und $Z'_2$ bezeichneten Phasendrehgliedern aus der Phasenlage der Bezugssignale A, B abgeleitet, und zwar vom Eingang der Verstärker $V_A$, $V_B$ aus. Ein Richtungsmessglied DZ, das ausser $Z'_1$ und $Z'_2$-Ausgänge auch die Spannung $U_G$ erhält, führt den Phasenvergleich entsprechend der Richtung von $U_G$ bezüglich $Z_1$ und $Z_2$ durch und leitet das bereits erwähnte Richtungs-Binärsignal der Auswertlogik AL zu. Die Spannung $U_G$ ist eine kurzschlussfremde Spannung. Sie bietet folgende Vorteile: Eindeutigen Entscheid bei sehr nahen Fehlern und wenn die Hochspannungswandler kapazitive Wandler sind. Bei einem dreipoligen Kurzschluss kann die Spannung $U_G$ durch eine vor dem Kurzschluss gespeicherte Spannung ersetzt werden. Die Auswertelogik AL führt im wesentlichen eine konjunktive Gesamtverknüpfung der zugeführten Binärsignale durch und liefert an ihrem Ausgang ein Kennzeichnungssignal für die Lage der Vektorspitze von U innerhalb oder ausserhalb des nun allseitig begrenzten Auslösegebietes.

Ein besonderer Vorteil der dargestellten Schaltung besteht darin, dass für ein Messsystem, welches das polygonale Auslösegebiet vollständig bestimmt, nur ein Strommesskanal erforderlich ist. Das bedeutet eine wesentliche Verminderung des Schaltungsaufwandes. Ausserdem erleichtert der Anschluss nur eines einfachen Phasendrehgliedes an den Stromwandler die Verwendung von Strom-Spannungswandlern mit Luftspalt als Eingangswandler. Diese Wandler sind wegen des niedrigeren Ueberdimensionierungsfaktors an sich vorteilhaft, erschweren aber die Anwendung von Bezugsimpedanzen mit verschiedenen und vor allem solchen mit kleinem Phasenwinkel. Diese Schwierigkeit wird durch die vorliegende Schaltung überwunden.

Einen weiteren Vorteil bietet die im Beispielsfall angewendete Ableitung der Grenzphasenwinkel vom Ausgang des Phasendrehgliedes am Eingangswandler und insbesondere von den Bezugssignalen A oder B bzw. von nur einem derselben. Diese Massnahme ermöglicht nämlich im Gegensatz von einer Ableitung der Grenzphasenwinkel von einer Wandlerausgangsgrösse eine äusserst einfache Umschaltung des Messsystems, d.h. der Eingänge der Verstärker $V_A$ und $V_B$ und des Leitungsspannungseinganges EU und der Stelle EM, zwischen verschiedenen Wandlersätzen zugehöriger Phasenleiter eines Mehrphasensystems in Abhängigkeit von der fehlerartbedingten Auswahl. Die entsprechenden Umschaltstellen, die ersichtlich nur wenige Messleitungen und entsprechende Kontakte umfassen, sind in Fig. 3 nur schematisch angedeutet und mit AS bezeichnet.

Eine weitere Ausführungsmöglichkeit besteht darin, dass die in Fig. 3 gezeigten Phasendrehglieder $Z'_1$, $Z'_2$ weggelassen werden, wobei die Bezugssignale A, B direkt dem Richtungsmessglied DZ zugeführt werden. Durch diese Konstruktion wird die Gesamtschaltung vereinfacht.

In Fig. 4 ist eine andere beispielsweise Ausführungsform

- 9 -

der erfindungsgemässen Einrichtung gezeigt. Die Schaltung
entspricht teilweise demjenigen gemäss Fig. 3, an Stelle
der Phasendrehglieder $Z'_1$, $Z'_2$ ist jedoch eine zweite
Mischstufe $M_2$ angeordnet. Somit wird das Relaisverhalten
in bezug auf Pendelung verbessert.

- 10 -

P a t e n t a n s p r ü c h e

1. Verfahren zur distanzselektiven Kurzschlussüberwachung von elektrischen Leitungen mit polygonalem Auslösegebiet, bei dem je ein Differenzsignal ($U_{dA}$, $U_{dB}$) zwischen der Leitungsspannung (U) und jeweils einem von mehreren Bezugssignalen (A, B), die mittels entsprechender Bezugsimpedanzen aus dem Leitungsstrom (I) gewonnen werden, gebildet wird und bei dem die so gebildeten Differenzsignale ($U_{dA}$, $U_{dB}$) einer Phasenwinkelüberwachung bezüglich vorgegebener Grenzphasenwinkel unterzogen werden, wobei mindestens zwei wenigstens annähernd phasengleiche Bezugssignale (A, B) gebildet werden und wobei die zugehörigen, aus diesen Bezugssignalen mit der Leitungsspannung (U) gewonnenen Differenzsignale ($U_{dA}$, $U_{dB}$) der Grenzphasenwinkelüberwachung unterworfen werden, dadurch gekennzeichnet, dass für den Richtungsentscheid eine kurzschlussfremde Spannung ($U_G$) beigezogen wird.

2. Verfahren nach Anspruch 1, dadurch gekennzeichnet, dass der Richtungsgrenze des polygonalen Auslösegebietes (1, 2, 3, 4) zugeordnete Grenzphasenwinkel für die Ueberwachung des Differenzsignals ($U_{dA}$) durch unterschiedliche Phasenverschiebung aus einem der Bezugssignale (A) abgeleitet wird.

3. Verfahren nach Anspruch 2, dadurch gekennzeichnet, dass für dreipoligen Kurzschluss oder im dreipoligen Kurzschluss eine zusätzliche Einrichtung mit Speicherrichtung angeordnet ist.

4. Einrichtung zur Durchführung des Verfahrens nach wenig-

- 11 -

stens einem der Ansprüche 1 bis 4, dadurch gekennzeichnet, dass zur Bestimmung der Resistanzgrenze ($G_R$), der Reaktanzgrenze ($G_X$) und der Richtungsgrenze ($Z_1$, $Z_2$) eines Auslösegebietes nur ein Messkanal (WI) für den Leitungsstrom und je ein Messkanal ($WU_R$ bzw. M) für die Spannung vorgesehen ist und dass der Leitungsstrom-Messkanal ein Phasendrehglied (P, C) für die Gewinnung der Phasenlage der Bezugssignale (A, B) aufweist.

5. Einrichtung nach Anspruch 4, dadurch gekennzeichnet, dass dem Phasendrehglied (P, C) für die Gewinnung der Bezugssignal-Phasenlage amplitudenbestimmende Glieder ($V_A$, $P_A$ bzw. $V_B$, $P_B$) für die Gewinnung verschiedener Bezugssignale (A bzw. B) nachgeordnet sind.

6. Einrichtung nach Anspruch 5, dadurch gekennzeichnet, dass zur Mehrfachverwendung eines Messsystems mit zwei gleichphasigen Bezugssignalen (A, B) für verschiedene Leitungsspannungen und Leitungsströme eine Auswahl-Umschaltung (AS) zwischen den Eingängen der amplitudenbestimmenden Glieder ($V_A$, $P_A$; $V_B$, $P_B$) der Bezugssignale (A; B) einerseits und einer Mehrzahl von Strommesskanälen (WI) mit zugehörigen Phasendrehgliedern (R, C) andererseits vorgesehen ist.

7. Einrichtung nach wenigstens einem der Ansprüche 4 bis 6, dadurch gekennzeichnet, dass ein Richtungsmessglied (DZ) für die Bestimmung des Grenzabschnittes ($Z_1$, $Z_2$) des Auslösegebietes vorgesehen ist, wobei an das Richtungsmessglied (DZ) über eine Mischstufe ($M_1$) zwei weitere Spannungswandler ($WU_S$, $WU_T$) angeschlossen sind.

8. Einrichtung nach wenigstens einem der Ansprüche 4 bis 6,

- 12 -

dadurch gekennzeichnet, dass ein Richtungsmessglied (DZ) für die Bestimmung des Grenzabschnittes ($Z_1$, $Z_2$) des Auslösegebietes vorgesehen ist, wobei an das Richtungsmessglied (DZ) über eine Mischstufe ($M_1$) zwei weitere Spannungswandler ($WU_S$, $WU_T$) angeschlossen sind und einer der Bezugssignale (A, B) zugeführt wird.

9. Einrichtung nach wenigstens einem der Ansprüche 4 bis 8, dadurch gekennzeichnet, dass ein Richtungsmessglied (DZ) für die Bestimmung des Grenzabschnittes ($Z_1$, $Z_2$) des Auslösegebietes vorgesehen ist, wobei die Bezugssignale (A und/oder B) über eine zweite Mischstufe ($M_2$) angeschlossen sind.

Fig.1

Fig.2

Fig. 3

Fig. 4

# 0055498

Nummer der Anmeldung

**Europäisches Patentamt**

## EUROPÄISCHER RECHERCHENBERICHT

EP 81 20 1321

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | ELEKTROTECHNISCHE ZEITSCHRIFT ETZ-A, Band 97, Nr. 9, September 1976 BERLIN (DE) W.KAISER u.a.: "Verhalten von mehrsystemigen Distanzschutzeinrichtungen bei unsymmetrischen Kurzschlüssen", Seiten 537-542  * Seite 538, rechte Spalte, Zeilen 38-54 *  -- | 1,3 | H 02 H 3/38 |
| A | TECHNISCHE MITTEILUNGEN AEG-TELEFUNKEN., Band 68, Nr. 5, September 1978 BERLIN (DE) H.RIJANTO: "Verhalten elektronischer Distanzschutzeinrichtungen mit polygonaler Auslösekennlinie bei Lichtbogen-Kurzschlüssen" Seiten 177-182  * Seite 182, linke Spalte,Zeilen 5-18 *  -- | 1 | **RECHERCHIERTE SACHGEBIETE (Int. Cl.³)**  H 02 H 3/00 |
| A | GB - A - 2 004 143 (BBC)  * das ganze Dokument *  -- | 1,2,4-6 | |
| A | BROWN BOVERI MITTEILUNGEN, Band 51, August-September 1970 BADEN (CH.) H.BARCHETTI u.a.: "Verhalten von Distanzrelais bei stationsnahen dreipoligen Kurzschlüssen", Seiten 343-347  * Seite 345, rechte Spalte,Zeilen 27-46 *  -- ./. | 3 | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. | |
|---|---|---|
| Recherchenort DEN HAAG | Abschlußdatum der Recherche 02-04-1982 | Prüfer RUGGIU |

EPA form 1503.1  06.78

| Europäisches Patentamt | EUROPÄISCHER RECHERCHENBERICHT |
|---|---|

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| D | <u>DE - A - 1 947 037</u> (SIEMENS)<br><br>--------- | 1 | |
| | | | **RECHERCHIERTE SACHGEBIETE (Int. Cl.³)** |